# EUROPÄISCHE PATENTSCHRIFT

(11) **EP 0 732 820 B1**
(45) Veröffentlichungstag und Bekanntmachung des Hinweises auf die Patenterteilung: **02.06.1999**
(21) Anmeldenummer: 96103347.9
(22) Anmeldetag: 04.03.1996
(51) Int. Cl.: H04B 17/00, H04B 7/26, H04B 1/16, G08B 21/00, H04Q 7/38

(54) **Kommunikationsanlage**
Communication system
Système de communication

(30) Priorität: 16.03.1995 DE 19509582
(43) Veröffentlichungstag der Anmeldung: 18.09.1996
(73) Patentinhaber: SIEMENS AKTIENGESELLSCHAFT, 80333 München (DE)
(72) Erfinder: Arbenz, Dietrich, Dipl.-Ing., 81479 München (DE)

(56) Entgegenhaltungen:
- EP-A- 0 310 379
- DE-A- 3 528 886
- US-A- 4 675 656
- US-A- 4 890 332
- US-A- 5 067 441
- US-A- 5 373 548

## Beschreibung

Ein Drahtlos-Kommunikationssystem weist üblicherweise eine Basisstation und zumindest ein Mobilteil auf. Beide sind miteinander über Funkkanäle verbunden. Die Basisstation ist mit einem Kommunikationsnetz verbunden. Eine Kommunikation des Mobilteiles mit weiteren Kommunikationsendgeräten außerhalb der Kommunikationsanlage ist damit möglich. Aus der europäischen Patentschrift EP 0 330 166 B1 ist es bekannt, bei einer zweiseitigen Kommunikationsverbindung den Empfangspegel zu messen und den zugehörigen Sendepegel entsprechend bestimmter Regelkriterien anzupassen, so daß durch die Sendeleistungsregelung bei ausreichender Übertragungsqualität Leistungsüberschüsse vermieden werden.

Die Überwachung des Aufenthaltes von Kindern innerhalb eines gefahrenfreien Raumes ist ein Problem, auf das es noch keine zufriedenstellende Lösungen gibt. Kinder wollen sich frei und ungehemmt bewegen und können dabei in ihrem Bewegungsdrang Gefahren ausgesetzt sein, z.B. durch den Straßenverkehr. Deshalb besteht seitens der Eltern ein Bedürfnis, das Verlassen eines gesicherten Raumes, z.B. des elterlichen Gartens, durch die Kinder festzustellen und entsprechend darauf reagieren zu können.

Aus der Patentschrift DE 32 15 942 A1 ist es bekannt, einen zu überwachenden Gegenstand mit einem ein kontinuierliches Sendesignal aussendenen Sender zu versehen und einen auf die Sendefrequenz des Senders angepaßten Empfänger vorzusehen, der bei Überschreiten eines Abstandes zwischen dem Sender und Empfänger ein Alarmsignal abgibt. Das kontinuierliche Sendesignal ruft jedoch einen hohen Stromverbrauch hervor und ist zudem mit Kommunikationsanlagen, die z.B. im zeitmultiplex betrieben werden, nicht kompatibel, da die Inanspruchnahme von funktechnischen Ressourcen erheblich ist. Aus österreichischen Patentschrift Nr. 377 367 ist zudem eine Anordung bekannt, bei der an Gegenstände ein Empfänger befestigt werden kann, der die von einem Sender kontinuierlich abgegeben Suchsignale gemäß eines Impulsbetriebes abfragt und ggf. ein Alarmsignal abgibt. Durch diese Anordnung kann die Stromaufnahme des Empfängers, jedoch nicht die des Senders, die wesentlich bedeutender ist, verringert werden. Diese Anordnung funktioniert nur, wenn sichergestellt ist, daß die Suchsignale in die impulsförmigen Betriebszeiten des Empfängers fallen.

Aus DE 35 28 886 A1 ist eine Funkfernsprechsystem mit einer Basisstation und einer Relaisstation bekannt, bei dem eine Mobilstation in Abhängigkeit vom gemessenen Empfangspegel eine Funkverbindung zur Basisstation oder zur Relaisstation unterhält. Aus EP 0 310 379 A2 ist ein Mobilfunkgerät bekannt, das an Zellgrenzen eines Mobilfunknetzes den Nutzer in Abhängigkeit vom gemessenen Empfangspegel benachrichtigt. Weiterhin ist aus US 5,067,441 eine Einrichtung zum Einschließen von Tieren in einem ringförmigen Bereich bekannt. Auch aus US 4,675,656, US 5,373,548 und US 4,890,332 sind Funksysteme bekannt, bei denen die Übertragungsbedindungen überwacht und dementsprechende Alarmmeldungen ausgelöst werden.

Der Erfindung liegt die Aufgabe zugrunde, eine Kommunikationsanlage für eine geringer Leistungsaufnahme so auszugestalten, daß sie die Veränderung der Distanz zwischen Teilen der Kommunikationsanlage feststellen kann und beim Überschreiten vorbestimmter Distanzen Signalisierungen ausgelöst werden. Die Lösung der Aufgabe stellt zugleich die Überwindung des Problems der Kinderüberwachung dar, sofern je eines der beiden im Rahmen der Erfindung eingesetzten Funkteile einem Kind und einer Aufsichtsperson - Elternteil - zugeordnet werden. Die Aufgabe wird durch die Kommunikationsanlage nach den Merkmalen Patentanspruchs 1 gelöst. Weiterbildungen sind den abhängigen Ansprüchen zu entnehmen.

Der wesentliche Aspekt der Erfindung ist darin zu sehen, die periodische Messung des Empfangspegels zur Bestimmung der zum Empfangspegel zugehörigen Distanzen zwischen z.B. Funkteil mit Sendeeinrichtung oder einer zugeordneten Basisstation und Funkteil mit Empfangseinrichtung heranzuziehen und einen Ansprechpegel festzulegen, der einer vorbestimmten Distanz entspricht. Ein Vergleich zwischen Empfangspegel und Ansprechpegel wird durchgeführt und bei einem größeren räumlichen Abstand als die vorbestimmte Distanz - der Empfangspegel ist damit kleiner als der Ansprechpegel - wird eine Signalisierung ausgelöst. Es wird hierbei die Fähigkeit von funktechnischen Kommunikationsanlagen ausgenutzt, Funkteile zueinander synchronisiert zu betreiben und zu bestimmten periodische wiederkehrenden Zeitspannen automatisch Funkverbindungen aufzubauen. Damit bietet sich die Möglichkeit, das Entfernen der Kinder aus der angestammten Umgebung sofort festzustellen und Reaktionen auszulösen, die auf diesen Umstand aufmerksam machen.

Aus der EP 0 089 667 A1 ist eine Vorrichtung zum Auffinden verlorengegangener Gegenstände bekannt. An Gegenständen kann ein Empfänger angebracht werden, der wahrnehmbare Signale abgibt, sobald ein zugehöriger Sender ein elektro-magnetisches Signal aussendet. Eine Person, die sich im Besitz des Senders befindet, kann damit den eventuell verlegten oder schwer auffindbaren Gegenstand durch den angebrachten Empfänger wieder auffinden. Eine Signalisierung findet entsprechend der Aufgabe dieser Vorrichtung nur beim Empfänger statt, der gesucht werden muß. Zur Überwachung von Kindern eignet sich diese Vorrichtung nicht, da die elektro-magnetischen Signale manuell am Sender ausgelöst werden müssen und keine automatische Pegel- bzw. Entfernungsmessung vorgesehen ist.

Eine vorteilhafte Ausgestaltung besteht darin, das mit der Empfangseinrichtung ausgestattete Funkteil als ein mobiles Funkteil auszubilden - Anspruch 2. Damit kann das mit der Empfangseinrichtung ausgestattete Funkteil dem Kommunikationsendgerät einer drahtlosen Kommunikationsanlage zumindest teilweise entsprechen. Kostengünstige Standardlösungen werden dadurch einsetzbar.

Das beim Unterschreiten des Empfangspegels erzeugte Signal soll vorteilhafterweise akustisch wahrnehmbar sein - Anspruch 3. Eine weitere vorteilhafte Weiterbildung der Erfindung besteht darin, eine zweite Funkverbindung zwischen den zwei Funkteilen aufzubauen, indem dem Funkteil mit Sendeeinrichtung zusätzlich eine Empfangseinrichtung und dem Funkteil mit Empfangseinrichtung eine zusätzliche Sendeeinrichtung zugeordnet ist - Anspruch 4. Die zweite Funkverbindung ermöglicht damit auch die Signalisierung des Unterschreitens des Ansprechpegels durch den Empfangspegel beim Funkteil mit Sendeeinrichtung. Dieser Funkteil mit Sendeeinrichtung könnte z.B. die Basisstation in der Nähe der Eltern oder ein über eine Basisstation mit dem Funkteil mit Empfangseinrichtung verbundenes Kommunikationsendgerät sein, die damit das Verlassen des angestammten, vorbestimmten Bereiches durch das Kind angezeigt bekommen würden.

Weiterhin kann die erfindungsgemäße Kommunikationsanlage dadurch vorteilhafterweie ausgestaltet werden, daß beim Unterschreiten eines einer zweiten vorbestimmten Distanz zugeordneten zweiten Ansprechpegels durch den Empfangspegel eine Funkverbindung zwischen dem Funkteil mit Sendeeinrichtung und dem Funkteil mit Empfangseinrichtung aufgebaut wird, über welche Sprachinformationen übertragen werden - Anspruch 5. Bei der Überwachung von Kindern können somit auch verbale Anweisungen, die entweder in der Kommunikationsanlage gespeichert bzw. verfügbar sind oder von den Eltern während einer Gesprächsverbindung direkt übermittelt werden, gegeben werden. Das Kind kann damit ebenfalls reagieren und ggf. mit den Eltern kommunizieren.

Zur Anpassung der erfindungsgemäßen Kommunikationsanlage an die speziellen örtlichen Gegebenheiten ist es vorteilhaft, daß die Ansprechpegel im Sinne der Veränderung der vorbestimmten Distanzen einstellbar sind - Anspruch 6.

Eine Weiterbildung der erfindungsgemäßen Kommunikationsanlage besteht darin, daß die Funkverbindung zwischen den beiden Funkteilen mit Hilfe einer Basisstation gesteuert wird, die zu beiden Funkteilen drahtlose Verbindungen aufrechterhält - Anspruch 7. Sowohl das Funkteil, das den Eltern zugeordnet ist, als auch das dem Kind zugedachte Funkteil können damit mobil sein. Diese Weiterbildung kann es den Eltern erleichtern, ständig die Überwachungsfunktionen wahrzunehmen.

Weitere vorteilhafte Ausbildungen gemäß den Ansprüchen 8 und 9 sehen vor, daß die erfindungsgemäße Kommunikationsanlage Teil eines nach Funkstandards, z.B. dem DECT-Standard oder CB-Funk-Standards, ausgebildeten drahtlosen KommunikationsSystems ist. Somit kann eine nach dem DECT-Standard ausgebildete Kommunikationsanlage, die die zur Synchronisation und dem automatischen Aufbau von Funkverbindungen erforderlichen Komponenten und Protokolle vorgibt, einfach und kostengünstig umgestaltet oder aufgerüstet werden bzw. kostengünstige CB-Funk Komponenten genutzt werden.

Zur weiteren Energieeinsparung sieht die vorteilhafte Weiterbildung des Anspruchs 10 vor, daß die Periode zwischen zwei automatisch aufgebauten Funkverbindungen mit Empfangspegelmeßung einstellbar ist. Durch die Einstellbarkeit der Periode kann die Überwachungsfunktion der Kommunikationsanlage den Gewohnheiten der Nutzungsumgebung angepaßt werden.

Gemäß einer weiteren vorteilhaften Weiterbildung ist dem Funkteil mit Sendeeinrichtung oder dem Funkteil mit Empfangseinrichtung eine Richtantenne zuordenbar - Ansprüche 11 und 12. Mit Hilfe der Richtantenne kann nunmehr nicht nur die Entfernung der beiden Funkteile überwacht werden, sondern auch die Richtung des jeweils anderen Funkteils in Bezug die Richtantenne und damit in Bezug auf den Standort der Eltern. Ein schnelles Auffinden der Kinder wird folglich erleichtert.

Die Weiterbildungen nach den Ansprüchen 13 und 14 bringen den Vorteil mit sich, daß durch eine geeignete Ausbildung eines oder beider Funkteile für eine Befestigung an einem Körper, das entsprechende Funkteil schnell und möglichst wenig störend am Körper befestigt, die Überwachungsfunktion schnell in Betrieb genommen und auch durch heftige Bewegungen nicht wieder außer Kraft gesetzt werden kann. Zweckmäßige Ausgestaltungsformen für die Funkteile sind miniaturisiert DECT-Mobilteile, Hals- oder Armbänder mit Funkteil, Armbanduhren, Aufkleber oder Hörkapseln.

In den Ansprüchen 15 bis 22 sind weitere vorteilhafte Vergegenständlichungen des Erfindungsgedankens dargelegt.

Ein Funkteil mit Empfangseinrichtung zur Verwendung innerhalb der Kommunikationsanlage ist als mobiles Funkteil ausgebildet und weist eine Antenneneinrichtung zum Empfangen hochfrequenter Signale, eine Meßeinrichtung zur Messung der durch Funkinformationen des Funkteils mit Sendeeinrichtung verursachten Empfangsfeldstärke, eine Auswerteeinrichtung zum Vergleichen eines Empfangspegels mit zumindest einem einstellbaren Ansprechpegel und eine Steuereinrichtung zur Synchronisation auf Funksignale einer in periodischen Abständen aufgebauten Funkverbindung und eine Steuereinrichtung zur Erzeugung eines Signales, die das Signal aktiviert, falls der Empfangspegel den ersten Ansprechpegel unterschreitet, auf - Anspruch 15. Vorteilhafterweise sind auch Einstellmittel zum Abstimmen des zumindest einen Ansprechpegels vorgesehen - Anspruch 16 - und diese Einstellmittel sind nicht über die Gehäuseoberfläche des Funkteiles mit Empfangseinrichtung zugänglich gemacht - Anspruch 17. Diese Weiterbildung sowie der Einsatz besonders kostengünstiger und platzsparender Komponenten und eine Befestigung des Funkteils mit Empfangseinrichtung an einem Körper und die Erweiterung um Komponenten, die zweiseitige Funkverbindungen ermöglichen - Anspruch 18 - schaffen die Möglichkeit, das Funkteil mit Empfangseinrichtung zu vereinfachen und zu miniaturisieren, und trotzdem universell zu nutzen. Dieses Funkteil kann einfache und dem Kind nicht über die Gehäuseoberfläche, sondern z.B. über erst nach teilweiser Öffnung des Funkteils zugängliche Einstellmittel umfassen, die eine Anspassung an die konkreten Einsatzbedingungen durch Einstellen des zumindest einen Ansprechpegels ermöglichen.

Das Funkteil mit Sendeeinrichtung zur Verwendung innerhalb der Kommunikationsanlage kann seinerseits als mobiles Funkteil ausgebildet werden und eine Antenneneinrichtung zum Senden hochfrequenter Signale und eine Signalgenerierungseinrichtung zur Erzeugung der hochfrequenten Signale aufweisen - Anspruch 19. Auch kann im Funkteil mit Sendeeinrichtung zusätzlich eine Empfangseinrichtung vorgesehen sein, um innerhalb einer weiteren Funkverbindung Funkinformationen zu empfangen- Anspruch 20. Besonders kostengünstige und platzsparende Komponenten können eingesetzt werden und eine Befestigung an einem Körper möglich sein. Diese extremen Vereinfachungen ermöglichen kostengünstige Lösungen und die Konzeption des erfindungsgemäßen Kommunikationssystem für den Masseneinsatz. Eines der Funkteile kann dabei innerhalb einer Basisstation einer Kommunikationsanlage, z.B. DECT, realisiert sein.

Gemäß den Ansprüchen 21 und 22 kann auch eine Basisstation eines Funksystems zur Unterstützung der Arbeitsweise der Funkteile vorgesehen sein, auch damit kann auf bekannte und nur leicht zu modifzierende Lösungen bei der Realisierung der erfindungsgemäßen Kommunikationsanlage zurückgegriffen werden.

Die erfindungsgemäße Kommunikationsanlage eignet sich auch zur Überwachung von Gegenständen und zur Signalisierung eines unbefugten Entfernens, indem ein Funkteil an dem entsprechenden Gegenstand befestigt wird. Es können dabei die Signalisierungsausgaben bei einem oder beiden Funkteilen aktiviert werden.

Ein Ausführungsbeispiel der erfindungsgemäßen Kommunikationsanlage soll im folgenden anhand zweier Zeichnungen näher erläutert werden. Dabei zeigen
- Fig 1: die schematische Darstellung einer beispielhaften Einsatzumgebung der erfindungsgemäßen Kommunikationsanlage und
- Fig 2: ein Pegeldiagramm zur Erläuterung des Verhältnisses von Sende-, Empfangs- und Ansprechpegeln zu korrespondierenden Distanzen und der ausgelösten Funktionen der erfindungsgemäßen Kommunikationsanlage.

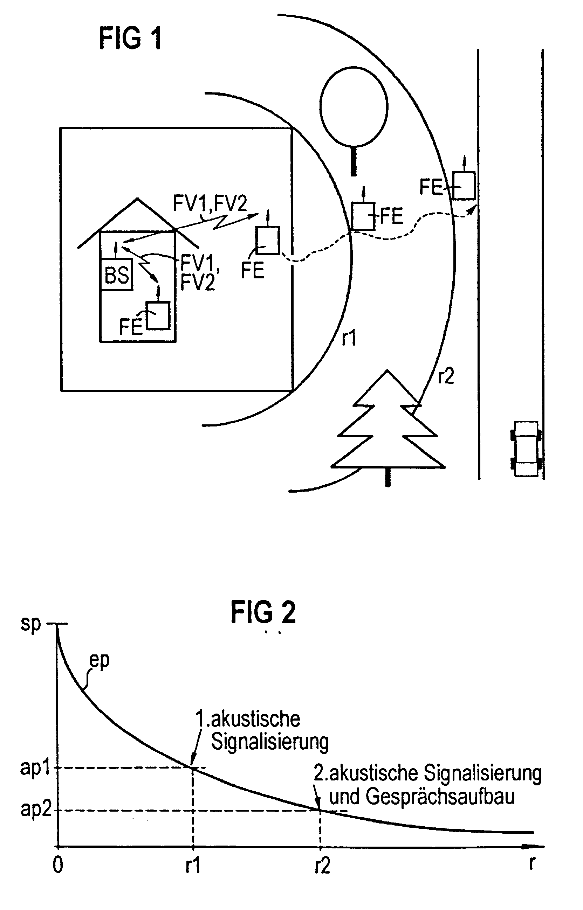

In Fig 1 ist ein Terrain mit einem Haus dargestellt, in welchem sich eine fest montierte Basisstation BS und ein Funkteil mit Sendeeinrichtung FS befinden. Um dieses Haus herum befindet sich ein Garten, der als angestammtes sicheres Gelände anzusehen ist. An den Garten schließt sich ein bewaldetes Gebiet an, das wiederum an eine Straße grenzt. Das Waldgebiet ist als ein Gebiet erhöhter Gefahren anzusehen und die Straße als ein Gebiet akuter Gefahr. Zwei Kreisbögen mit den Radien r1, r2 um die Basisstation BS repräsentieren Orte eines jeweils konstanten Empfangspegels ep. Die Empfangspegel ep sind auf einen konstanten Sendepegel sp der Basisstation BS bezogen. In einer reellen Funkumgebung sind die vorbestimmten Distanzen r1, r2 von den Ortskoordinaten abhängig. Die Menge der Distanzen r1, r2 entspricht nicht jeweils einem Kreis, sondern eher unregelmäßigen, aber geschlossene Formen. Der Empfangspegel ep im Funkteil mit Empfangseinrichtung FE ist bei einem Abstand vom Funkteil mit Sendeeinrichtung FS, die der vorbestimmten Distanz r1 entspricht, dem ersten Ansprechpegel ap1 gleich. Entsprechendes gilt für den zweiten Ansprechpegel ap2 in Bezug auf die zweite vorbestimmte Distanz r2.

Die Basisstation BS und das Funkteil mit Empfangseinrichtung FE verfügen über Sende- und Empfangseinrichtungen. Die Funkverbindungen FV1,FV2 zwischen den beiden Funkteilen FS,FE werden mit Hilfe der Basisstation BS gesteuert. Die Basisstation BS und das Funkteil mit Sendeeinrichtung FS sind entsprechend den bekannten Komponenten aus Drahtlos-Kommunikationssystemen nach dem DECT-Standard ausgebildet, wodurch kostengünstige Lösungen durch die Vorteile dieses oder eines ähnlichen Standards und die Integration der Anlage in bestehende Kommunikationsanlagen unter Inanspruchnahme nur geringer funktechnischer Ressourcen und mit ein geringen Energieverbrauch ermöglicht werden. Das Funkteil mit Empfangseinrichtung FE umfaßt ebenfalls entsprechende HF-Komponenten nach dem DECT-Standard zum Auf- und Abbau und zur Unterhaltung einer Funkverbindung FV1,FV2 entsprechend dem DECT-Standard. Ansonsten ist das Funkteil mit Empfangseinrichtung FE miniaturisiert und kann durch Befestigungsmittel an Körpern befestigt werden. Zum Zwecke der Überwachung des Aufenthaltes von Kindern wird das Funkteil mit Empfangseinrichtung FE einem Kind zugeordnet und an ihm auf eine Weise befestigt, daß es das Kind nicht bei seiner Bewegung behindert.

Dem Funkteil mit Sendeeinrichtung FS ist eine Richtantenne zugeordnet. Diese Richtantenne ist an der Basisstation BS angebracht und kann in alle Richtungen bewegt werden. Es ist jedoch auch möglich das Funkteil mit Sendeeinrichtung FS direkt in der Basisstation BS zu realisieren. Die Auswertung eines wiederum vom Funkteil mit Empfangseinrichtung FE gesendeten und in der Basisstation BS empfangenen Pegels als Funktion der Richtung wird im Funkteil mit Sendeeinrichtung FS ausgewertet. Dort ist über eine Anzeigevorrichtung der aktuelle Empfangspegel ep anzeigbar. Durch die Zuordnung des maximalen Empfangspegels ep zu einer Richtung ergibt sich die Ortung des Funkteils mit Empfangseinrichtung FE und damit die des Kindes.

Die Abstimmung der Ansprechpegel ap1, ap2 erfolgt auf folgende Weise. Das Funkteil mit Empfangseinrichtung FE wird bis zu der vorbestimmten Distanz r1 bzw. r2 von der Basisstation BS wegbewegt, und durch einfache Bedienmittel eine Empfangspegelmessung für den jeweiligen Punkt ausgelöst und der gemessene Empfangspegel ep als Ansprechpegel ap1 bzw. ap2 in zumindest einem der Funkteile FE, FS abgespeichert.

Das Kind und damit das zugeordnete Funkteil mit Empfangseinrichtung FE befindet sich normalerweise in seinem angestammten Bereich innerhalb des Kreisbogens, der über die erste vorbestimmte Distanz r1 bezeichnet ist. Die automatisch und periodisch durchgeführte Empfangspegelmessung ergibt im Funkteil mit Empfangseinrichtung FE jeweils einen Empfangspegel ep, der größer ist als der erste Ansprechpegel ap1. Infolgedessen wird keine Signalisierung eingeleitet. Überschreitet nun das Kind beim Spielen einen räumlichen Abstand der gegenüber der vorbestimmten Distanz r1 größer ist, dann sinkt der Empfangspegel ep unter den ersten Ansprechpegel ap1. Sowohl beim Funkteil mit Empfangseinrichtung FE als auch beim Funkteil mit Sendeeinrichtung FS wird ein wiederholtes akustisches Warnsignal ausgegeben. Die Eltern werden damit benachrichtigt, daß sich das Kind entfernt und dem Kind wird signalisiert, daß das Entfernen nicht erwünscht ist. Beim Überschreiten eines räumlichen Abstandes von der Mobilstation, der der zweiten vorbestimmten Distanz r2 entspricht, wird der Empfangspegel ep im Funkteil mit Empfangseinrichtung FE auch kleiner als der zweite Ansprechpegel ap2. Das Kind ist nun unter Umständen der akuten Gefahr durch den Straßenverkehr auf der Straße sehr nahe. Im Funkteil mit Sendeeinrichtung FS wird nun ein zweites akustisches Warnsignal ausgesendet. Wenn auf dieses zweite akustische Warnsignal durch die Eltern reagiert wird, wird eine zweite Funkverbindung FV2 aufgebaut, über welche Sprachinformationen übertragen werden können. Die Eltern können damit direkt mit ihrem Kind sprechen und es auf die gefährliche Situation aufmerksam machen und zum Rückkehren auffordern. Das Kind kann dabei auf die Aufforderungen der Eltern reagieren. Bei Abwesenheit der Eltern können auch in einem Anrufbeantworter oder einem Voice Mail-System gespeicherte und der erfindungsgemäßen Kommunikationsanlage zur Verfügung stehende Sprachnachrichten übermittelt werden.

Es ist selbstverständlich möglich, auch mehrere Funkteile mit Empfangseinrichtung FE parallel zu nutzen. Damit können auch mehrere Kinder überwacht werden. Analog läßt sich die Überwachung von Kindern auch auf die Überwachung von anderen Körpern übertragen. Unter diesen Körpern sind insbesondere Gegenstände zu verstehen, die der Gefahr des unbefugten Entfernens ausgesetzt sind. Auch hier sind entsprechende Signalisierungsmechanismen nötig. Sowohl beim Funkteil mit Sendeeinrichtung FS, d.h. der angenommenen Überwachungszentrale, als auch beim Funkteil mit Empfangseinrichtung FE - es ist am potentiell diebstahlgefährdeten Körper angebracht - wird beim Überschreiten von vorbestimmten Distanzen zwischen dem Funkteil mit Empfangseinrichtung FE und der Basisstation BS bzw. dem Funkteil mit Sendeeinrichtung FS eine Signalisierung ausgelöst. Die erfindungsgemäße Kommunikationsanlage ist damit zum Diebstahlschutzsystem ausbaubar. Sie kann auch dazu dienen, die Bewegung von Körpern in bestimmten Bereichen zu überwachen, z.B. von Körpern während des Transportes innerhalb eines Fertigungsprozesses oder von Fahrzeugen in einem Werksgelände. Es kann zu weiterhin als vorteilhaft erweisen die diebstahlgefährdeten Körper jeweils mit einem Funkteil mit Sendeeinrichtung FS auszustatten und die Zentral mit einem korrespondieren Funkteil mit Empfangseinrichtung FE zu versehen. Die erfindungsgemäße Kommunikationsanlage gestattet hierbei vielfältigste Ausbildungsvarianten.

In Fig 2 wird durch ein Pegeldiagramm die Zuordnung von Sende-, Empfangs- und Ansprechpegeln sp,ep,ap1,ap2 zu Distanzen 0,..,r1,r2 vorgenommen, und die Punkte der Auslösung von Signalisierungsmaßnahmen aufgezeigt. Die Ordinate des Diagramms gibt die Pegel an, wobei der Sendepegel sp als Maximalpegel angenommen wird und die Ansprechpegel ap1 und ap2 deutlich gemacht werden. Die Abszisse zeigt die Distanz r zwischen Funkteil mit Empfangseinrichtung FE und Basisstation BS. Der Empfangspegel ep ist dem Quadrat dieser Distanz r umgekehrt proportional und ist als Funktion in dieses Diagramm eingezeichnet. Der Schnittpunkt der Funktion des Empfangspegels ep mit dem ersten Ansprechpegel ap1 entspricht der vorbestimmten Distanz r1 und löst die erste akustische Signalisierung aus. Der Schnittpunkt dieser Funktion mit dem zweiten Ansprechpegel ap2 entspricht der zweiten vorbestimmten Distanz r2. Für diese zweite vorbestimmte Distanz wird die zweite Signalisierungsmaßnahme, d.h. der Aufbau einer Sprechverbindung eingeleitet.

## Patentansprüche

1. Kommunikationsanlage mit zumindest zwei Funkteilen (FS, FE), von denen eines eine Sendeeinrichtung aufweist und das andere eine Empfangseinrichtung sowie eine Meßeinrichtung zur Messung der durch eine Funkinformation des Funkteils (FS) mit Sendeeinrichtung verursachten Empfangsfeldstärke aufweist,
- wobei in einer an die Meßeinrichtung angeschlossenen Steuerschaltungsanordnung ein erster, einer vorbestimmten Distanz (r1) zwischen den Funkteilen (FS, FE) entsprechender Ansprechpegel (ap1) auf den Empfangspegel (ep) einer ersten Funkverbindung (FV1) zwischen den beiden Funkteilen (FS, FE) abgestimmt ist, und
- wobei durch das mit der Empfangseinrichtung ausgestattete Funkteil (FE) ein Signal erzeugt wird, sobald der Empfangspegel (ep) kleiner als der erste Ansprechpegel (ap1) ist,
**dadurch gekennzeichnet,**
daß beim Unterschreiten eines einer zweiten vorbestimmten Distanz (r2) zugeordneten zweiten Ansprechpegels (ap2) durch den Empfangspegel (ep) eine Funkverbindung (FV1,FV2) zwischen dem Funkteil mit Sendeeinrichtung (FS) und dem Funkteil mit Empfangseinrichtung (FE) aufgebaut wird, über welche Sprachinformationen übertragen werden.

2. Kommunikationsanlage nach Anspruch 1,
**dadurch gekennzeichnet,**
daß das mit der Empfangseinrichtung ausgestattete Funkteil (FE) ein mobiles Funkteil ist.

3. Kommunikationsanlage nach einem der vorhergehenden Ansprüche, **dadurch gekennzeichnet**,
daß das beim Unterschreiten des ersten Ansprechpegels (ap1) durch den Empfangspegels (ep) erzeugte Signal ein akustisch wahrnehmbares Signal ist.

4. Kommunikationsanlage nach einem der vorhergehenden Ansprüche, **dadurch gekennzeichnet,**
daß eine zweite Funkverbindung (FV2) zwischen den zwei Funkteilen (FS,FE) aufgebaut wird, indem dem Funkteil mit Sendeeinrichtung (FS) zusätzlich eine Empfangseinrichtung zugeordnet ist und dem Funkteil mit Empfangseinrichtung (FE) zusätzlich eine Sendeeinrichtung zugeordnet ist.

5. Kommunikationsanlage nach einem der vorhergehenden Ansprüche, **dadurch gekennzeichnet,**
daß der Ansprechpegel (ap1) im Sinne der Veränderung der vorbestimmten Distanz (r1) einstellbar ist.

6. Kommunikationsanlage nach einem der vorhergehenden Ansprüche, **dadurch gekennzeichnet**,
- daß die erste Funkverbindung (FV1) mit Empfangspegelmeßung zum Funkteil mit Empfangseinrichtung (FE) in periodischen Abständen nur kurzzeitig aufgebaut wird, und
- daß die beiden Funkteile (FS,FE) in Bezug auf die erste Funkverbindung (FV1) miteinander synchronisiert sind.

7. Kommunikationsanlage nach einem der vorhergehenden Ansprüche, **dadurch gekennzeichnet,**
daß zumindest eine Funkverbindung (FV1,FV2) zwischen den beiden Funkteilen (FS,FE) mit Hilfe einer Basisstation (BS) gesteuert wird, die zu beiden Funkteilen (FS,FE) drahtlose Verbindungen (FV1,FV2) aufrechterhält.

8. Kommunikationsanlage nach einem der vorhergehenden Ansprüche, **dadurch gekennzeichnet**,
daß sie Teil eines nach dem DECT-Standard ausgebildeten drahtlosen Kommunikationssystems ist.

9. Kommunikationsanlage nach einem der Ansprüche 1 bis 7, **dadurch gekennzeichnet**,
daß sie Teil eines nach Funkstandards, insbesondere CB-Funk-Standards, ausgebildeten Kommunikationssystems ist.

10. Kommunikationsanlage nach einem der vorhergehenden Ansprüche, **dadurch gekennzeichnet**,
daß die Periode zwischen zwei automatisch aufgebauten Funkverbindungen (FV1) mit Empfangspegelmeßung einstellbar ist.

11. Kommunikationsanlage nach einem der Ansprüche 4 bis 10, **dadurch gekennzeichnet**,
daß dem Funkteil mit Sendeeinrichtung (FS) eine Richtantenne zuordenbar ist.

12. Kommunikationsanlage nach einem der Ansprüche 4 bis 10, **dadurch gekennzeichnet**,
daß dem Funkteil mit Empfangseinrichtung (FE) eine Richtantenne zuordenbar ist.

13. Kommunikationsanlage nach einem der vorhergehenden Ansprüche, **dadurch gekennzeichnet**,
daß das Funkteil mit Empfangseinrichtung (FE) derart ausgebildet ist, daß es an einem Körper befestigbar ist und nach der Befestigung diesen Körper nicht bei seiner Bewegung behindert.

14. Kommunikationsanlage nach einem der Ansprüche 1 bis 12, **dadurch gekennzeichnet**,
daß das Funkteil mit Sendeeinrichtung (FS) derart ausgebildet ist, daß es an einem Körper befestigbar ist und nach der Befestigung diesen Körper nicht bei seiner Bewegung behindert.

## Claims

1. Communication system having at least two radio components (FS, FE), one of which has a transmitter and the other of which has a receiver and a measuring device for measuring the reception field strength caused by an item of radio information of the radio component (FS) with transmitter,
- a first response level (ap1), which corresponds to a predefined distance (r1) between the radio components (FS, FE), being, in a control circuit arrangement connected to the measuring device, tuned to the reception level (ep) of a first radio link (FV1) between the two radio components (FS, FE), and
- a signal being generated by the radio component (FE), which is equipped with the receiver, as soon as the reception level (ep) is lower than the first response level (ap1),
characterized in that, when the reception level (ep) drops below a second response level (ap2), which is assigned to a second predefined distance (r2), a radio link (FV1, FV2) is set up between the radio component with transmitter (FS) and the radio component with receiver (FE), via which voice information is transmitted.

2. Communication system according to Claim 1, characterized in that the radio component (FE), which is equipped with the receiver, is a mobile radio component.

3. Communication system according to one of the preceding claims, characterized in that the signal which is generated when the reception level (ep) drops below the first response level (ap1) is a signal which can be perceived acoustically.

4. Communication system according to one of the preceding claims, characterized in that a second radio link (FV2) is set up between the two radio components (FS, FE) in that, in addition, a receiver is assigned to the radio component with transmitter (FS) and, in addition, a transmitter is assigned to the radio component with receiver (FE).

5. Communication system according to one of the preceding claims, characterized in that the response level (ap1) can be set in accordance with the change in the predefined distance (r1).

6. Communication system according to one of the preceding claims, characterized
- in that the first radio link (FV1) is set up to the radio component with receiver (FE) only briefly at periodic intervals using reception level measurement, and
- in that the two radio components (FS, FE) are synchronized with one another with respect to the first radio link (FV1).

7. Communication system according to one of the preceding claims, characterized in that at least one radio link (FV1, FV2) between the two radio components (FS, FE) is controlled with the aid of a base station (BS) which maintains wireless links (FV1, FV2) to the two radio components (FS, FE).

8. Communication system according to one of the preceding claims, characterized in that it is part of a wireless communication system which is constructed according to the DECT standard.

9. Communication system according to one of Claims 1 to 7, characterized in that it is part of a communication system which is constructed according to radio standards, in particular CB radio standards.

10. Communication system according to one of the preceding claims, characterized in that the period between two automatically set-up radio links (FV1) can be set using reception level measurement.

11. Communication system according to one of Claims 4 to 10, characterized in that a directional antenna can be assigned to the radio component with transmitter (FS).

12. Communication system according to one of Claims 4 to 10, characterized in that a directional antenna can be assigned to the radio component with receiver (FE).

13. Communication system according to one of the preceding claims, characterized in that the radio component with receiver (FE) is constructed in such a way that it can be attached to an element and, after the attachment, does not impede this element during its movement.

14. Communication system according to one of Claims 1 to 12, characterized in that the radio component with transmitter (FS) is constructed in such a way that it can be attached to an element and, after the attachment, does not impede this element during its movement.

## Revendications

1. Installation de communication comportant au moins deux parties (FS, FE) radio, dont l'une comporte un dispositif d'émission et dont l'autre comporte un dispositif de réception ainsi qu'un dispositif de mesure pour mesurer l'intensité de champ de réception provoqué par une information radio de la partie (FS) radio à dispositif d'émission,
- un premier niveau (ap1) de réponse correspondant à une distance (r1) prédéterminée entre les parties (FS, FE) radio étant, dans un montage de commande raccordé au dispositif de mesure, adapté au niveau (ep) de réception d'une première liaison (FVl) radio entre les deux parties (FS, FE) radio, et
- un signal étant produit par la partie (FE) radio munie du dispositif de réception, dès que le niveau (ep) de réception est inférieur au premier niveau (ap1) de réponse,
caractérisée en ce que,
dans le cas où le niveau (ep) de réception passe au-dessous d'un deuxième niveau (ap2) de réponse associé à une deuxième distance (r2) prédéterminée, une liaison (FV1, FV2) radio entre la partie radio à dispositif (FS) d'émission et la partie radio à dispositif (FE) de réception est établie, par l'intermédiaire de laquelle des informations vocales sont transmises.

2. Installation de communication suivant la revendication 1, caractérisée en ce que la partie (FE) radio munie du dispositif de réception est une partie radio mobile.

3. Installation de communication suivant l'une des revendications précédentes, caractérisée en ce que le signal produit dans le cas où le niveau (ep) de réception passe au-dessous du premier niveau (ap1) de réponse est un signal perceptible à l'oreille.

4. Installation de communication suivant l'une des revendications précédentes, caractérisée en ce qu'une deuxième liaison (FV2) radio est établie entre les deux parties (FS, FE) radio en associant à la partie radio à dispositif (FS) d'émission de plus un dispositif de réception et en associant à la partie radio à dispositif (FE) de réception de plus un dispositif d'émission.

5. Installation de communication suivant l'une des revendications précédentes, caractérisée en ce que le niveau (ap1) de réponse peut être réglé au sens de la variation de la distance (r1) prédéterminée.

6. Installation de communication suivant l'une des revendications précédentes, caractérisée en ce que
- la première liaison (FV1) radio à mesure de niveau de réception avec la partie radio à dispositif (FE) de réception n'est établie à des intervalles périodiques que pendant une courte durée, et
- les deux parties (FS, FE) radio sont synchronisées l'une avec l'autre en relation avec la première liaison (FV1) radio.

7. Installation de communication suivant l'une des revendications précédentes, caractérisée en ce qu'au moins une liaison (FV1, FV2) radio entre les deux parties (FS, FE) radio est commandée à l'aide d'une station (BS) de base qui maintient des liaisons (FV1, FV2) sans fil avec les deux parties (FS, FE) radio.

8. Installation de communication suivant l'une des revendications précédentes, caractérisée en ce qu'elle fait partie d'un système de communication sans fil réalisé suivant la norme DECT.

9. Installation de communication suivant l'une des revendications 1 à 7, caractérisée en ce qu'elle fait partie d'un système de communication réalisé suivant une norme radio, notamment suivant la norme radio CB.

10. Installation de communication suivant l'une des revendications précédentes, caractérisée en ce que la période entre deux liaisons (FV1) radio établies automatiquement, comportant une mesure de niveau de réception, peut être réglée.

11. Installation de communication suivant l'une des revendications 4 à 10, caractérisée en ce qu'une antenne directive peut être associée à la partie radio à dispositif (FS) d'émission.

12. Installation de communication suivant l'une des revendications 4 à 10, caractérisée en ce qu'une antenne directive peut être associée à la partie radio à dispositif (FE) de réception.

13. Installation de communication suivant l'une des revendications précédentes, caractérisée en ce que la partie radio à dispositif (FE) de réception est réalisée de manière à pouvoir être fixée à un corps et, après fixation à ce corps, à ne pas gêner son mouvement.

14. Installation de communication suivant l'une des revendications 1 à 12, caractérisée en ce que la partie radio à dispositif (FS) d'émission est réalisée de manière à pouvoir être fixée à un corps et, après fixation à ce corps, à ne pas empêcher son mouvement.
